# EUROPEAN PATENT SPECIFICATION

(11) **EP 3 269 272 B1**
(45) Date of publication and mention of the grant of the patent: **16.09.2020**
(21) Application number: 17186985.2
(22) Date of filing: 18.12.2009
(51) Int. Cl.: A46B 5/02, A46D 3/00

(54) **ORAL CARE IMPLEMENT HAVING MULTI-COMPONENT HANDLE**
MUNDPFLEGEVORRICHTUNG MIT GRIFF AUS MEHREREN BESTANDTEILEN
INSTRUMENT DE SOIN BUCCAL MUNI D'UN MANCHE MULTICOMPOSANT

(43) Date of publication of application: 17.01.2018
(62) Divisional of application: 09795869.8
(73) Proprietor: Colgate-Palmolive Company, New York, NY 10022 (US)
(72) Inventor: MOSKOVICH, Robert, East Brunswick, NJ 08816 (US); JIMENEZ, Eduardo, Manalapan, NJ 07726 (US); ROONEY, Michael, Millburn, NJ 07041 (US); BOHNER, Marco, 6204 Sempach (CH)
(74) Representative: Thum, Bernhard

(56) References cited:
- EP-A1- 1 621 106
- WO-A1-2006/002804
- WO-A1-2008/064873
- WO-A1-2008/131958
- WO-A2-2004/026162
- US-A1- 2003 070 259
- US-A1- 2004 010 876
- US-A1- 2006 230 652
- US-A1- 2009 183 331
- US-A1- 2009 188 063
- US-A1- 2009 193 600
- US-B1- 6 298 516

## Description

### Field of the Invention

The present invention relates generally to oral care implements, and specifically to oral care implements, such as toothbrushes, having a handle constructed of multiple components and/or materials.

### Background of the Invention

Oral care implements, such as toothbrushes, are mass-produced articles and must therefore allow cost-effective production. Toothbrushes made of a single plastic material and toothbrushes made of two plastic components, which are produced for example by a two component injection molding process, are known. In the latter case, known toothbrushes generally comprise two parts: a first part made of a hard plastic material, for example polypropylene; and a second part made of a resilient plastic material, for example a thermoplastic elastomer. Typically, the first part, which is made of the hard plastic material, forms the structural portion of the handle and has a recess or channel formed therein. This recess is filled with the resilient plastic material, thereby forming the second part which acts as a gripping surface or cover.

The hard plastic and the resilient soft plastic are selected so that they bond with one another at the surface where the two plastic parts touch. In comparison with a toothbrush made of only one plastic material, this provides greater scope for design. Since, however, the two plastic materials have to bond with one another during the injection-molding operation, there are restrictions in the selection of the plastic materials and consequently in the design of the toothbrush.

One solution to the limitation that two plastic materials must bond with one another during the injection molding operation has been introduced by which a handle can be formed by two plastics that do not chemically bond within one another during the injection molding operation but rather utilize a mechanical connection, such as by interfitting portions of the two plastic components or by shrinking one plastic component about the other. With respect to creating a two component toothbrush having a grip cover over a hard plastic body, this known method is limited in its design capability to a tubular sleeve that receives a cylindrical core structure within its cavity so as to circumferentially surround the entire circumference of the cylindrical core structure. This arrangement is limiting in both possible designs for the handle and the fact that the resulting handle must either be bulky or sacrifice strength.

Another oral care implement having a multi-component handle that is known in the art includes a gripping region having a thermoplastic elastomer ("TPE") grip surface with a plurality of spaced slot openings exposing portions of a hard plastic base. This handle also includes an inclined portion and a soft TPE grip body extending through the hard plastic base of the handle to form opposite finger grips on the inclined portion of the handle. This soft grip body provides shifting of a mass centroid during use. In this construction, the handle of the oral care implement comprises three components, a hard plastic handle body, a grip cover/surface formed of a first TPE, and a grip body formed of a second TPE which is softer than the first TPE.

A need exists for an oral care implement, and method of manufacturing the same, that has a handle having greater design flexibility, is more cost-effective to mass produce, and/or affords comfort and control to the user during use.

WO 2008/064873 A1 discloses a toothbrush having a handle with a hard component comprising a metallic covering that is covered with another hard component by injection molding.

WO 2004/026162 A2 discloses a toothbrush having a handle and a head secured to the handle including a gripping section on the handle.

US 2009/0188063 A1 discloses a toothbrush body having on its top side a hand-supporting section with at least one longitudinal support strip which extends along the longitudinal axis of a handle part and next to which is located at least one recess which extends laterally from the top side to a bottom side.

US 2006/0230652 A1 discloses a toothbrush including a head part of the toothbrush with bristles, a handle part made with clear or opaque thermoplastic material, a molded recess inside the handle for placement of an insert having text or an image on one or both sides, a clear or opaque window insert placed inside the recess on top of the insert and a soft spongy part of the toothbrush molded to the handle of the toothbrush for convenient gripping of the handle by a user.

US 2003/0070259 A1 discloses personal care products having grips with a sheath/core construction.

US 2009/0193600 A1 discloses a method of manufacturing a handle for a personal grooming device including forming a substrate portion of a first material.

US 2004/0010876 A1 discloses an injection molding process for making a molded article, such as a toothbrush consisting partly of a hard first plastics material by providing a first injection mold introducing a component into the cavity adjacent to the surface, injecting a plastics material into the cavity so that the plastic material is fixed to the component and the component forms part of the outer surface of the article.

US 2009/0183331 A1 discloses a toothbrush equipped with a handle of which the surface is formed, at least in certain sections, in a facet-like manner by way of multiplicity of planar surface-area elements.

US 6,298,516 B1 discloses a toothbrush that includes a body and a brush head extending from the body, the body including a handle having a distal end, and a resilient element mounted on the handle, a tapered distal tip of the resilient element extending beyond the distal end of the handle.

EP 1 621 106 A1 discloses an oral care implement having improved handle for control including a gripping region having a grip surface with a plurality of spaced slot openings exposing portions of the base.

### Summary of the Invention

An oral care implement according to the present invention is defined in claim 1. Preferred features are defined in the dependent claims.

In one aspect useful for understanding the invention, an oral care implement has a multi-component handle constructed of at least four components constructed of different materials. In another aspect an oral care implement has a multi-component handle having a core structure, an elongated handle structure at least partially surrounding the core structure, and a grip cover strategically located on the elongated handle body to conceal through holes in the elongated body resulting from supporting the core structure during the injection molding process.

In one embodiment useful for understanding the invention an oral care implement comprises: a handle having a proximal end and a distal end; a head connected to the distal end of the handle; the handle comprising a first component constructed of a first material, a second component constructed of a second material, a third component constructed of a third material and a fourth component constructed of a fourth material.

In another embodiment useful for understanding the invention an oral care implement comprises: a head; a handle having a distal end and a proximal end, the head connected to the distal end of the handle; the handle comprising a core structure constructed of a first rigid material and an elongated handle body constructed of a second rigid material, the core structure disposed within a through slot of the elongated handle body so that the core structure is exposed on opposite lateral surfaces of the handle; and a grip cover constructed of a resilient material, the grip cover covering a front surface, a rear surface and a proximal end surface of the elongated handle body.

In a further embodiment useful for understanding the invention an oral care implement comprises: a head; a handle having a distal end and a proximal end, the head connected to the distal end of the handle; the handle comprising a core structure constructed of a first rigid material and an elongated handle body constructed of a second rigid material that does not form a chemical bond with the first material during an injection molding process; the core structure disposed within a through slot of the elongated handle body so that the core structure is exposed on opposite surfaces of the handle; at least one through hole on a first surface of the elongated handle body through which the core structure is exposed and at least one through hole on a second surface of the elongated handle body through which the core structure is exposed, the second surface opposite the first surface; the core structure comprising a first protuberance that extends into the through hole on the first surface of the elongated handle body and a second protuberance that extends into the through hole on the second surface of the elongated handle body; and a grip cover constructed of a resilient material covering the through hole on the first surface of the elongated handle body and the through hole on the second surface of the elongated handle body, the resilient material forming a chemical bond with the second material during an injection molding process.

In a yet further embodiment useful for understanding the invention a method of forming a handle for an oral care implement comprises: a) injecting a liquefied first plastic into a first mold cavity to form a core structure of the first plastic; b) supporting the core structure within a second mold cavity with a gripping member that contacts the core structure at two or more points of contact on opposite surfaces of the core structure; c) injecting a liquefied second plastic into the second mold cavity to form an elongated handle body that at least partially surrounds the core structure, thereby forming a handle assembly, the elongated handle body surrounding the gripping member resulting in a through hole in the elongated handle body for each point of contact, the points of contact exposed via the through holes; d) supporting the handle assembly in a third mold cavity; and e) injecting a liquefied resilient material into the third mold cavity to form a grip cover over the elongated handle body, the grip cover overlying the through holes.

In still a further embodiment useful for understanding the invention an oral care implement comprises: a head; a handle having a distal end and a proximal end, the head connected to the distal end of the handle; the handle comprising a core structure constructed of a transparent rigid material and an elongated handle body constructed of an opaque rigid material; the core structure disposed within a through slot of the elongated handle body so that the core structure is exposed on opposite surfaces of the handle so as to form a window through the handle; and a plurality of facets formed into an interior of the core structure that are visible through the window and reflect visible light.

### Brief Description of the Drawings

This invention is capable of use in a broad array of oral care implements and hygiene products. The drawings illustrate one use of the invention and are not to be construed as the only embodiment of the invention.
Figure 1 is a perspective view of an toothbrush according to one embodiment of the present invention.
Figure 2 is a front view of the toothbrush of Figure 1 according to one embodiment of the present invention.
Figure 3 is a rear view of the toothbrush of Figure 1 according to one embodiment of the present invention.
Figure 4 is a left side lateral view of the toothbrush of Figure 1 according to one embodiment of the present invention, the right side lateral view of which is a mirror image.
Figure 5 is a longitudinal cross-sectional view of the toothbrush of Figure 1 taken along view V-V of Figure 2 according to one embodiment of the present invention.
Figure 6 is a lateral cross-sectional view of the toothbrush of Figure 1 taken along view VI-VI of Figure 3 according to one embodiment of the present invention.
Figure 7 is a perspective view of the toothbrush of Figure 1 showing the four components of the handle in an exploded state according to one embodiment of the present invention.
Figure 8 is a perspective view of a core structure of the handle of the toothbrush of Figure 1 according to one embodiment of the present invention.
Figure 9 is a perspective view of a handle assembly consisting of the core structure of Figure 8 with the elongated handle body overmolded thereto according to one embodiment of the present invention.
Figure 10 is a perspective view of the handle consisting of the handle assembly of Figure 9 with the grip cover overmolded to the elongated handle body according to one embodiment of the present invention.

### Detailed Description of the Invention

In the following description, the invention is discussed in terms of a manual toothbrush, and method of manufacturing the same, having the inventive multi-component handle. However, in other forms, the invention could be in the form of other oral care implements including a soft-tissue cleansing implement, an inter-proximal pick, a flossing tool, a plaque scraper, a powered toothbrush, or other ansate implement designed for oral care. It is also to be understood that other embodiments may be utilized, and that structural and functional modifications may be made without departing from the scope of the present invention.

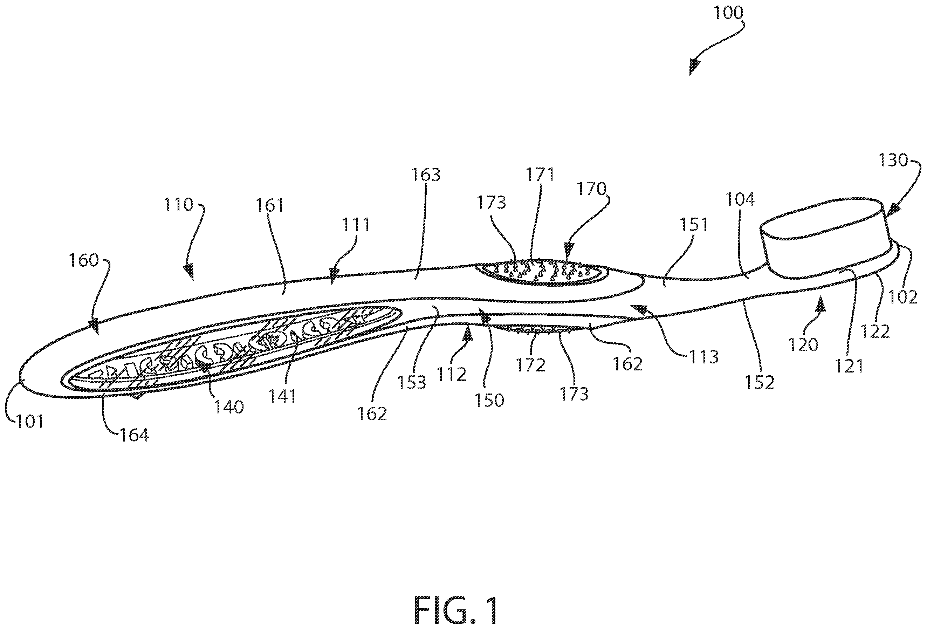

Referring first to Figures 1-4 concurrently, a toothbrush **100** is illustrated according to one embodiment of the present invention. The toothbrush **100** generally comprises a handle **110** and a head **120.** The handle **110** provides the user with a mechanism by which he/she can readily grip and manipulate the toothbrush **100.** The handle **110** includes ergonomic features which provide a high degree of control for the user while maintaining comfort. The head **120** is connected to a distal end **102** of the handle **110** and includes a set of teeth cleaning elements **130,** which are generically illustrated.

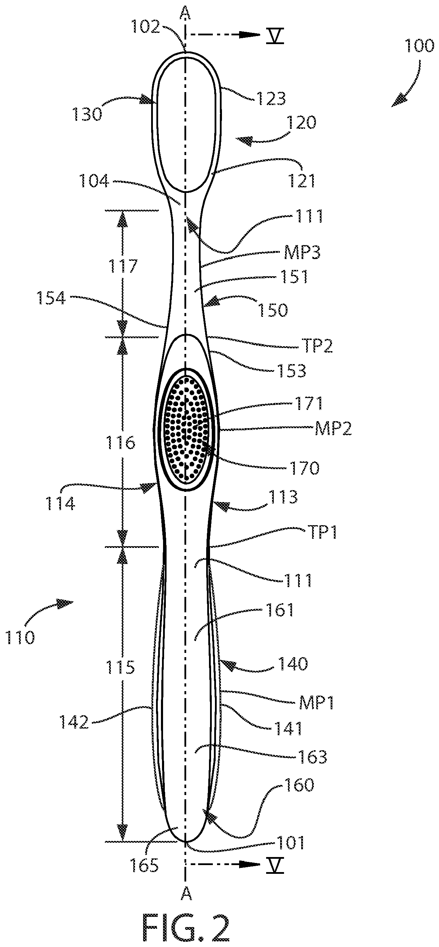

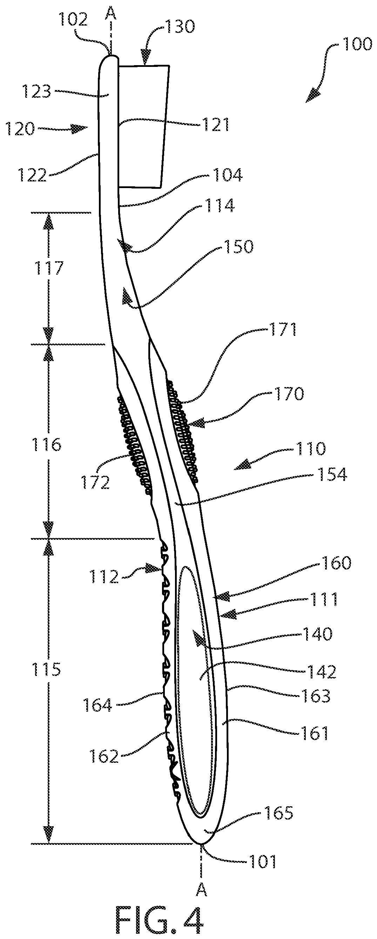

Generally, the toothbrush **100** extends from a proximal end **101** (which is also the proximal end of the handle **110**) to a distal end **102** along a longitudinal axis **A-A** (illustrated in FIG. 2). Conceptually, the longitudinal axis **A-A** is a reference line that is generally coextensive with the three-dimensional center line of the handle **110** and the head **120.** Because the handle **110** is a non-linear structure (as can be seen in FIG. 4 as viewed laterally) in the illustrated embodiment, the longitudinal axis **A-A** for toothbrush 100 is also non-linear in the illustrated embodiment. However, the invention is not so limited, and in certain embodiments, the toothbrush may have a simple linear arrangement and thus a substantially linear longitudinal axis **A-A.**

The head **120** is operably connected to the handle **110.** As discussed in greater detail below, the head **110** and the handle **120** of the toothbrush **100** are preferably formed as an integral structure using an injection molding process. More specifically, in the exemplified embodiment, the head **120** is integrally formed with the elongated handle body **150** (discussed in greater detail below). However, in other embodiments, the handle **110** and the head **120** may be formed as separate components which are operably connected at a later stage of the manufacturing process by any suitable technique known in the art, including without limitation thermal welding, sonic welding, a tight-fit assembly, a coupling sleeve, adhesion, or fasteners. Whether the head **120** and the handle **110** are constructed as an integral piece or a multi-piece assembly (including connection techniques) is not limiting of the present invention in all embodiments. Furthermore, other manufacturing techniques may be used in place of and/or in addition to injection molding to create the handle **110** and/or the head **120** (or components thereof), such as milling and/or machining.

It should be noted that relative terms such as distal, middle, proximal, upper, lower, top, bottom, lateral, front, rear, left, right etc. are merely used to delineate relative positions of the components of the toothbrush **100** with respect to one another and are not intended to be in any further way limiting of the present invention.

The head **120** generally comprises a front surface **121** and a rear surface **122.** The front surface **121** and the rear surface **122** of the head **120** can take on a wide variety of shapes and contours, none of which are limiting of the present invention. For example, the front and rear surfaces **121, 122** can be planar, contoured or combinations thereof. The front surface **121** and rear surface **122** are bound by a peripheral or lateral surface **123.**

The set of teeth cleaning elements **130,** which are generically illustrated as a block, are provided on and extend outward from the front surface **121** of the head **120** for cleaning contact with an oral surface, preferably teeth. While the set of cleaning elements **130** is particularly suited for brushing teeth, the set of cleaning elements **130** can also be used to clean oral soft tissue, such as a tongue, gums, or cheeks instead of or in addition to teeth. As used herein, the term "cleaning element" is used in a generic sense to refer to any structure that can be used to clean or massage an oral surface through relative surface contact.

Common examples of "cleaning elements" include, without limitation, filament bristles, fiber bristles, nylon bristles, spiral bristles, rubber bristles, elastomeric protrusions, flexible polymer protrusions, co-extruded filaments, flag bristles, crimped bristles, anti-bacterial bristles and combinations thereof and/or structures containing such materials or combinations.

The set of cleaning elements **130** can be connected to the head **120** in any manner known in the art. For example, anchor free tufting (AFT) could be used to mount the cleaning elements. In AFT, a plate or membrane is secured to the brush head such as by ultrasonic welding. The bristles (or other elastomeric elements) extend through the plate or membrane. The free ends of the bristles on one side of the plate or membrane perform the cleaning function. The ends of the bristles on the other side of the plate or membrane are melted together by heat to be anchored in place. Any suitable form of cleaning elements may be used in the broad practice of this invention. Alternatively, the bristles could be mounted to tuft blocks or sections by extending through suitable openings in the tuft blocks so that the base of the bristles is mounted within or below the tuft block. Staple technology may also be used.

Furthermore, if desired, the rear surface **122** may also comprise additional structures for oral cleaning, such as a soft tissue cleanser. Such soft tissue cleansers are typically constructed of a TPE and include one or more projections, such as nubs and/or ridges, for engaging and massaging soft oral tissue, such as the tongue.

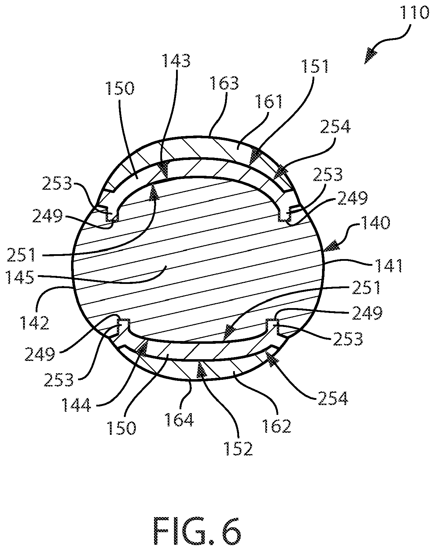

The handle **110** of the toothbrush **100** generally comprises a front surface **111** and a rear surface **112** which is opposite the front surface **111.** The handle **110** also comprises a right lateral surface **113** and a left lateral surface **114** opposite the right lateral surface **113.** As best visible in FIG. 6, the front surface **111,** the rear surface **112,** the right lateral surface **113** and the left lateral surface **114** collectively form the outer surface of the handle **110,** which has a generally elliptical lateral cross-sectional shape along its longitudinal length.

As will be described in greater detail below, the overall front surface **111** of the handle **110** is formed by the collective of the outer surface **163** of the front leg **161** of the grip cover **160,** the front surface **171** of the grip body **170,** and a portion of the front surface **151** of the elongated handle body **150.** Similarly, the overall rear surface **112** of the handle **110** is formed by the collective of the outer surface **164** of the rear leg **162** of the grip cover **160,** the rear surface **172** of the grip body **170,** and a portion of the rear surface **152** of the elongated handle body **150.** The overall right lateral surface **113** of the handle **110** is formed by the collective of the right lateral surface **153** of the elongated handle body **150** and the right lateral surface **141** of the core structure **140.** Similarly, the overall left lateral surface **114** of the handle **110** is formed by the collective of the left lateral surface **154** of the elongated handle body **150** and the left lateral surface **142** of the core structure **140.**

As best shown in FIGS. 2-4, the handle **120** can be conceptually delineated in longitudinal sections comprising a proximal section **115,** a middle section **116** and a neck section **117.** The proximal section **115** is the portion or segment of the handle **110** that generally fits comfortably within the palm of the user. The middle section **116** forms the portion or segment of the handle **110** that generally fits comfortably between the user's thumb and index finger. The neck portion forms the portion or segment of the handle **110** that connects to the head **120.**

The proximal section **115** longitudinally extends from the proximal end **101** of the toothbrush **100** to the middle section **116.** The middle section **116** longitudinally extends from the proximal section **115** to the neck section **117.** The neck section **117** extends from the middle section **116** to the head **120.** While the head **120** is illustrated as being widened relative to the neck section **117** of the handle **110,** the head **120** could in some constructions simply be a continuous extension or narrowing of the neck section **117** of the handle **110.** The proximal section **115** comprises a transverse cross-sectional area that gradually increases from the proximal end **101** of the toothbrush **100** to a middle point **MP1** of the proximal section **115.** The transverse cross-sectional area of the proximal section **115** then gradually decreases from the middle point **MP1** to the transition point **TP1** between the proximal section **115** and the middle section **116.** The middle section **116** has a transverse cross-sectional area that gradually increases from the transition point **TP1** to the middle point **MP2** of the middle section **116** and then gradually decreases from the middle point **MP2** to the transition point **TP2** between the middle section **116** and the neck section **117.** The transverse cross-sectional area of the neck section **117** gradually decreases from the transition point **TP2** to the middle point **MP3** of the neck section and then increases from the middle point **MP3** to the head **120.** The handle **120** of the toothbrush **100** preferably has a maximum transverse cross-sectional area at middle point **MP1** of the proximal section **115.** The increasing and decreasing transverse cross-sectional area discussed above results in a handle **110** having an undulating structure which is more reliably and comfortably held within the user's hand. Further, this wide construction of the proximal and middle sections **115, 116** requires less fine motor control by the user and is, hence, easier to hold and manipulate.

Referring solely to FIG. 4, the middle section **116** is angled with respect to the proximal section **115** and the neck section **117.** Thought of another way, the middle section **116** is inclined relative to the proximal section and the neck section to define an inclined portion or segment of the handle **110** that is positioned for comfortable gripping and to facilitate a desired offset positioning of the head relative to the proximal section **115.** The angle of the incline is preferably 23 degrees, but may range between 5 to 40 degrees. The inclined nature of the middle section **116** relative to the proximal and neck sections **115, 117** allows for improved control of the handle **110** during brushing in which the head **120** can be more desirably positioned within the mouth to engage the tooth cleaning elements **130** against the teeth.

The core structure **140** is located within the proximal section **115** of the handle **110.** The grip body **170** is located within the middle section **116** of the handle **110.** The grip cover **160** covers both the proximal section **115** and the middle section **116** of the handle **110.**

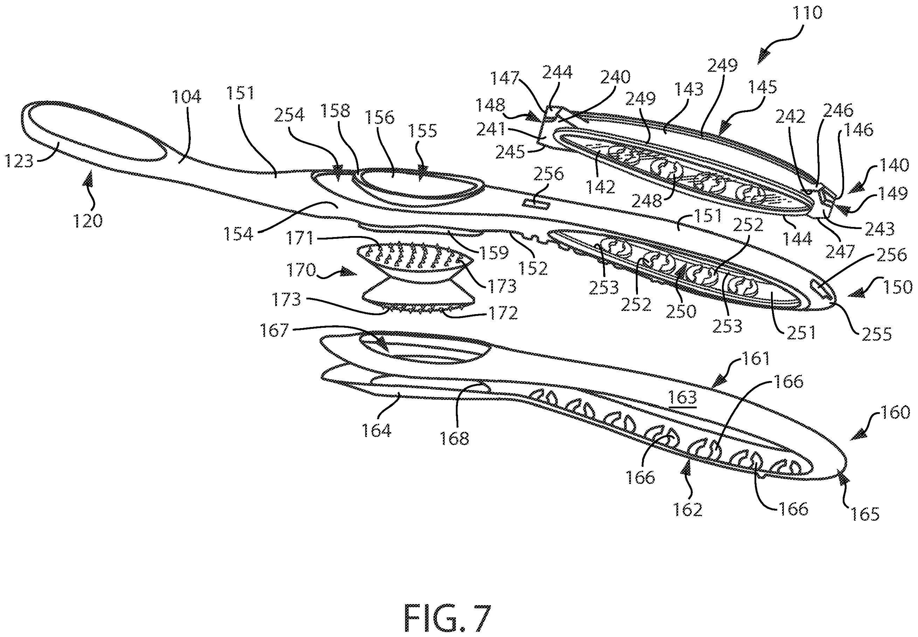

Referring now to FIG. 7, the handle **110** is illustrated in an exploded state so that its four components are visible. The four components of the handle **110** include a core structure **140,** an elongated handle body **150,** a U-shaped grip cover **160** and a grip body **170.** These components cooperatively form an ergonomic and cost effective handle **110** by which the user holds and manipulates the toothbrush. The structure of each of these components will now be described in detail.

The core structure **140** is an elongated structure extending from a proximal end **146** to a distal end **147.** The core structure has a generally ovoid shaped solid body **145.** The solid body **145** comprises a right lateral surface **141,** a left lateral surface **142,** a front surface **143** and a rear surface **144.** The rear surface **144** is opposite the front surface **143** while the right lateral surface **141** is opposite the left lateral surface **142.** All of the surfaces **141-144** are preferably convex surfaces, thereby giving the core structure **140** an elliptical transverse cross-sectional area that tapers toward both the proximal and distal ends **146, 147.** Of course, the core structure can take on other shapes and sizes. Collectively, the surfaces **141-144** form the outer surface of the core structure **140.**

A first protuberant structure **148** is located at the distal end **147** of the solid body **145.** A second protuberant structure **149** is located at the proximal end **146** of the solid body **145.** The first protuberant structure **148** comprises a first upper protuberance **240** protruding outward from the front surface **143** of the solid body **145** and a first lower protuberance **241** protruding outward from the rear surface **144** of the solid body **145.** The second protuberance structure **149** comprises a second upper protuberance **242** protruding outward from the front surface **143** of the solid body **145** and a second lower protuberance **243** protruding outward from the rear surface **144** of the solid body **145.** While two pairs of protuberances **240-241** and **242-243** are exemplified, the core structure **140** may of course have more or less protuberances as desired. Moreover, such protuberances may be located in different positions on the body **145** either longitudinally or laterally, or be omitted all together.

The first upper protuberance **240** comprises a contact surface **244.** The second upper protuberance **243** comprises a contact surface **245.** The first lower protuberance **241** comprises a contact surface **246.** The second lower protuberance **243** comprises a contact surface **247.** While it is desirable that the contact surfaces **244-247** be located on the protuberant structures **148, 149,** the invention is not so limited and the contact surfaces **244-247** may be located directly on the body **145** in alternative embodiments. As will be described in greater detail below, the contact surfaces **244-247** provide points of contact that are used to support the core structure **240** during subsequent steps of the manufacturing process. Furthermore, and as will also be discussed in greater detail below, the protuberant structures **148, 149** mechanically engage the elongated handle body **150** to provide structural integrity to the handle **110** by prohibiting unwanted relative movement between the core structure **140** and the elongated handle body **150.**

The rear surface **144** of the core structure comprises a plurality of arcuate grooves **248** that form depressions in the rear surface **144** of the core structure **140.** The grooves **248** are preferably arcuate in shape and extend laterally across the substantial entirety of the width of the rear surface **144** in a spaced-apart manner. The arcuate grooves **248** are arranged in pairs wherein the two arcuate grooves **248** in each pair are oriented so that their concave sides oppose one another, thereby collectively forming a segmented circular groove.

Of course, other types of grooves and or ridges can be provided on the outer surface of the core structure **140** if desired. For example, a pair of spaced apart longitudinally extending linear grooves **249** could be provided on both the front and rear surfaces **143, 144** of the core structure **140** between which the arcuate grooves **248** are located.

The core structure **140** is preferably a unitary single component constructed of a rigid material, such as for example a hard plastic. Suitable hard plastics include polyethylene, polypropylene (PP), polyamide, polyester, cellulosics, SAN, acrylic, ABS or any other of the commonly known thermoplastics used in toothbrush manufacture. Preferably, the core structure **140** is constructed of a transparent rigid material. Suitable transparent rigid materials include without limitation clarified PP and clear polyesters, such as polyethylene terephthalate or a copolyester, such as poly-cyclohexylene dimethylene terephthalate, acid modified, polyester (PCTA) or styrene acrylonitrile (SAN), acrylonitrile butadiene styrene (ABS), polymethyl methacrylate (PMMA) or a cellulosic plastic, such as cellulose acetate propionate (CAP). Most preferably, the core structure is constructed of a substantially transparent SAN due to the benefits relating to cost, clarity and hardness characteristics.

When the core structure **140** is constructed of a transparent hard plastic, such as SAN, the grooves **248** formed into the rear surface **144** of the body **145** are visible through both the right and left lateral surfaces **141, 142** of the core structure **140** (which remain exposed when the toothbrush **100** is in an assembled state). As a result, the topography of the grooves **140** (formed by the floors and upstanding sidewalls of the grooves **140**) act as facets that create the visible appearance of a shimmer or sparkle by deflecting and/or reflecting visible light, similar to the effect created by the facets of a diamond. Of course, in some embodiments of the invention, this shimmer or sparkle effect can be achieved by forming facets within the solid body **145** itself or in one or both of the front and rear surfaces **143, 144.**

The elongated handle body **150** is preferably a unitary structure that integrally comprises the head **120** and provides the general structure and shape for the handle **110** of the toothbrush **100.** The elongated handle body **150** comprises a front surface **151,** a rear surface **152,** a right lateral surface **153** and a left lateral surface **154.** The rear surface **152** is opposite the front surface **151** while the right lateral surface **153** is opposite the left lateral surface **154.** Collectively, the surfaces **151-154** form the outer surface of the elongated handle body **150.**

The elongated handle body **150** comprises an aperture **155** extending through the elongated handle body **150** from the top surface **151** to the bottom surface **152.** The aperture **155** forms a laterally oriented passageway through the elongated handle body **150** and is provided to receive the grip body **170** (discussed in greater detail below). The aperture **155** preferably occupies more than one-half of the transverse cross-sectional area at point **MP2.** Nevertheless, other constructions are possible. The aperture 155 is located in the middle portion **116** of the handle **110.**

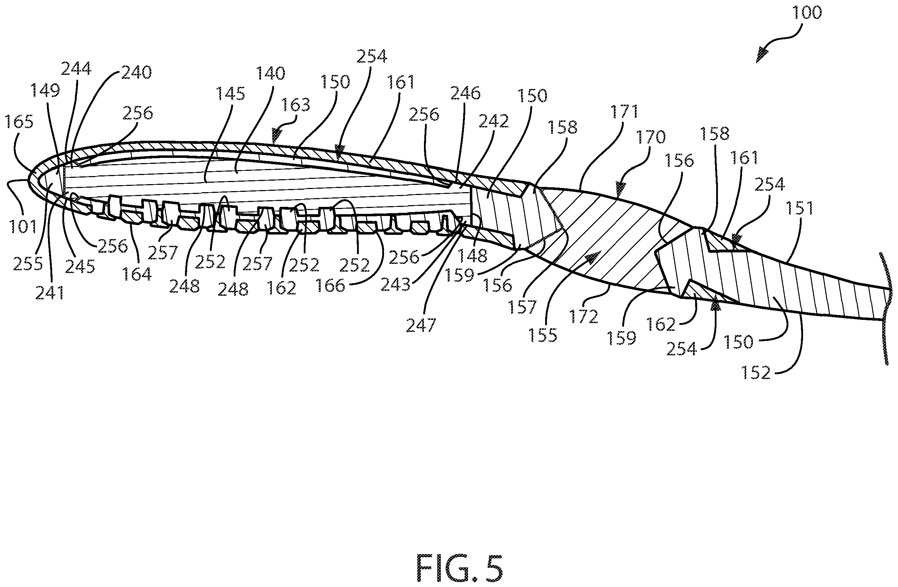

The aperture **155** is defined by a sidewall **156** (FIG. 5) that tapers with increasing depth from both the front and rear surfaces **151, 152** of the elongated handle body **150,** thereby coming to an annular apex/edge **157** (FIG. 5) that is located within the aperture **155** and is the narrowest part of the aperture **155.** This dual-tapered sidewall geometry retains and allows dynamic positioning of the resilient grip body **170** during use of the toothbrush **100** and provides a weight shifting feature which improves control of the handle **110** during use.

The sidewall **156** of the aperture **155** extends beyond the front surface **151** and the rear surface **152** of the elongated handle body **150,** thereby forming an annular ridge (or rim) **158** that protrudes from the front surface **151** of the elongated handle body **150** and an annular ridge (or rim) **159** that protrudes from the rear surface **151** of the elongated handle body **150.** The annular ridges **158, 159** circumferentially surround the aperture **155** on both the front and rear surfaces **151, 152** of the elongated handle body **150.**

The elongated handle body **150** further comprises a through slot **250** which is formed by an inner surface **251.** The through slot **250** extends from the right lateral surface **153** to the left lateral surface **154** of the elongated handle body **150,** thereby forming a laterally extending passageway through the elongated body **150.** The through slot **250** is located in the proximal section **115** of the handle **110.** Preferably, the through slot **250** is arranged at an approximately 90 degree offset from the aperture **155** (as measured circumferentially about the longitudinal axis **A-A** of the handle **110**). The through slot **250** has a longitudinal cross-sectional area that occupies a majority of the longitudinal cross-sectional area of the proximal section **115** of the handle **110.** Thought of another way, the through slot **250** occupies a majority of the volume of the proximal section **115** of the handle **110,** preferably in a range of 55% to 95% and more preferably in a range of 75% to 90% of the volume of the proximal section **115** of the handle **110.**

A plurality of internal projections, which are illustrated in the form of ridges **252,** are provided that protrude from the inner surface **251** of the elongated handle body **150** and into the cavity of the through slot **250.** Of course, the internal projections can take on other shapes, such as nubs, walls, mounds, etc.

The internal ridges **252** are preferably arcuate in shape and extend laterally across the substantial entirety of the width of the inner surface **251** in a spaced-apart manner. The arcuate internal ridges **252** are arranged in pairs wherein the two arcuate internal ridges **252** which make up each pair are oriented so that their concave sides oppose one another, thereby collectively forming a segmented circular internal ridge. The internal ridges **252** are sized and shaped to correspond to the grooves **248** of the core structure **140.** As will be discussed in greater detail below, when the toothbrush **100** is assembled and the core structure **140** is disposed within the through slot **250** of the elongated handle body **150,** the ridges **252** of the elongated handle body **150** extend into and fill the grooves **248** of the core structure **140.** The cooperation of the ridges **252** and the grooves **248** helps mechanically secure the core structure **140** within the through slot **250** so that the core structure **140** does not become dislodged from the elongated handle body **150** during repeated use of the toothbrush **100.**

A pair of longitudinally extending linear ridges **253** also protrude from the inner surface **251** into the cavity of the through slot **250.** The arcuate ridges **252** are located between the linear ridges **253.** These linear ridges **253** extend into and fill the linear grooves **249** of the core structure **140** when the core structure **140** is disposed within the through slot **250.**

A longitudinally extending channel **254** (which can also be referred to as a groove or depression) is provided in the outer surface of the elongated handle body **150.** The channel **254** is a U-shaped channel that starts on the front surface **151** of the elongated handle body **150,** wraps around a proximal end **255** of the elongated handle body **150,** and continues onto the rear surface **152** of the elongated handle body **150.** More specifically, the channel **254** extends longitudinally from the transition point **TP2** on the front surface **151** to the proximal end **255,** wraps around the proximal end **255,** and extends longitudinally from the proximal end **255** back to the transition point **TP2** on the rear surface **152.** The channel **254** thereby extends along both the proximal section **115** and middle section **116** of the handle **110.** The channel **254** surrounds the aperture **155** on both the front and rear surfaces **151, 152** (specifically the annular ridges **158, 159**). As will be described in greater detail below, the channel **254** receives and is filled with the grip cover **260.**

A plurality of through holes **256** are provided in the elongated handle body **150** that form passageways into the through slot **250** from the front and rear surfaces **151, 152.** In the illustrated embodiment, two through holes **256** are provided on each of the front and rear surfaces **151, 152** of the elongated handle body **150** within the channel **254.** The through holes **256** on the front surface **151** are generally aligned with the through holes **256** on the rear surface **152.** A first pair of the through holes **256** are located adjacent the proximal end **255** of the elongated handle body **150** while a second pair of the through holes **256** are located adjacent the transition point **TP1.** Of course, more or less of the through holes **256** can be provided as needed and their location can be varied. As described in greater detail below, the through holes **256** are the result of the tooling used to support the core structure **140** during the injection overmolding of the elongated handle body **150** about the core structure **140.** However, the through holes **256** also receive the protuberances **240-243** of the core structure to provide a mechanical connection between the core structure **140** and the elongated handle body **150** when the core structure **140** is disposed within the elongated handle body **150.**

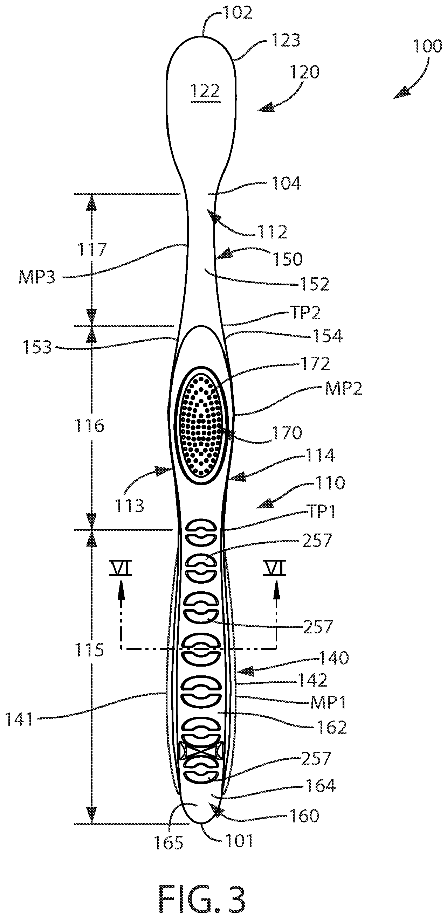

At least one outer projection **257** (best visible in FIGS. 3 and 5) is provided on the rear surface **152** of the elongated handle body **150.** Preferably, a plurality of spaced apart outer projections **257** are provided that protrude from the rear surface **152.** While the outer projections **257** could have virtually any shape, they are preferably in the form of spaced-apart arcuate ridges (or ribs) that laterally extend the width of the rear surface **152.** In the preferred embodiment, the outer arcuate ridges **257** correspond to the arcuate internal ridges **252** in shape and positioning on the elongated handle body **150.** The arcuate outer ridges **257** are arranged in pairs wherein the two arcuate outer ridges **257** which make up each pair are oriented so that their concave sides oppose one another, thereby collectively forming a segmented circular internal ridge.

The arcuate outer ridges **257** preferably span laterally between the lateral surfaces **113, 114** of the handle **110,** although they may have different transverse lengths. The transverse length of each arcuate outer ridge **257** generally matches the width at the longitudinal location along the handle **110.** However, the arcuate outer ridges **257** are preferably slightly short of the actual width of handle **110** at any one location so as to be covered on the sides by grip cover **160.** Since arcuate outer ridges **257** span the width of the handle **110** in the proximal and middle sections **115, 116,** they each have varying lengths due to the variations in the width of these sections **115, 116.**

As a result of the spaced-apart arrangement of the arcuate outer ridges **257,** a transverse channel or groove is defined between each of the adjacent arcuate outer ridges **257.** These transverse channels are configured to receive and retain the material of the grip cover **160,** such as a thermoplastic elastomer (TPE) or other similar materials used in oral care products.

The elongated handle body **150** is preferably a unitary single component constructed of a rigid material, such as for example a hard plastic. Suitable hard plastics include polyethylene, polypropylene (PP), polyamide, polyester, cellulosics, SAN, acrylic, ABS or any other of the commonly known thermoplastics used in toothbrush manufacture. Preferably, the elongated handle body **150** is constructed of a hard plastic material that is a different type of plastic than the hard plastic material of which the core structure **140** is constructed. Most preferably, the elongated handle body is constructed of an opaque PP.

The grip cover **160** is a generally U-shaped (or tong-shaped) cover or layer of resilient material. The grip cover **160** is fixed to the elongated base handle **150** to provide a gripping surface to improve performance during use. The grip cover **160** is positioned within the channel **254** of the elongated handle base **150** when the toothbrush **100** is in an assembled state.

The grip cover **160** conceptually comprises three sections, a front leg **161,** a rear leg **162** and a curved segment **165** that connects the front and rear legs **161, 162** in an opposing manner. The overall shape and size of the front and rear legs **161, 162** are mirror images of one another and, thus, are equal in length, width and overall shape and size. A first opening **167** is provided in the front leg **161** while a second opening **168** is provided in the rear leg **162.** The first and second openings **167, 168** receive the annular ridges/rims **158, 159** of the elongated handle body **150** when the grip cover **160** is fixed to the elongated handle body **150.**

The rear leg **162** comprises a plurality of spaced-apart openings **166,** preferably in the form of arcuate slots that extend transversely across the rear leg **162.** The openings **166** are sized, shaped and positioned to be aligned with the outer arcuate ridges **257** of the elongate handle body **150.** When the grip cover **160** is fixed to the elongate handle body **150,** the outer arcuate ridges **257** extend into the openings **166** and are thus exposed via the openings **166.** To form openings **166,** suitable injection molding equipment mates with the top surfaces of the outer arcuate ridges **257** to prevent overmolding of the outer arcuate ridges **257** and any undesired deflection of the elongated handle base **150** during the molding process. This enables the top surfaces of the outer arcuate ridges **257** to be exposed after the molding process that adds the grip cover **160** to the base **150.**

As can be seen best in FIG. 5, the top surfaces of the outer arcuate ridges **257** are preferably recessed in the openings **166** relative to the outer surface **164** of the rear leg **162** of the grip cover **160.** In other words, the grip cover **160** is created to have a sufficient thickness so as to control the depth of the openings **166.** By ensuring that the top surfaces of the outer arcuate ridges **257** are depressed relative to the outer surface **164** of the rear leg **162** of the grip cover **160,** the openings **166** prevent slippage of the handle **110** by enabling portions of the user's fingers to slightly protrude into the depth of the openings **166.** Additionally, openings **166** channel water away from the fingers tips during wet operational conditions. Air is also able to enter the openings during brushing to provide some evaporative effect.

The grip cover **160** is preferably constructed of a resilient material, such as a thermoplastic elastomer (TPE). To provide comfort as well as control benefits, the elastomeric material of the grip cover **160** preferably has a hardness durometer measurement in the range of A13 to A50 Shore hardness, although materials outside this range may be used. A more preferred range of the hardness durometer rating is A25 to A40 Shore hardness. Furthermore, while an injection molded construction of the grip cover **160** is preferred, the grip cover **160** may, in some embodiments, be formed as a thin layer and attached to elongated handle base **150** with an appropriate adhesive, sonic welding, thermal welding or other technique.

The grip body **170** is a generally bulbous shaped body that bulges out of the aperture **155** of the elongated handle body **150.** The grip body **170** fills the aperture **155** of the elongated handle body **150** and, thus, takes on the shape of the aperture **155.** The grip body has a convex front surface **171** and a convex rear surface **172,** which resemble an oval or elliptical shape. The bulbous shape of the grip body **170** enables the user to reliably roll and control the handle **110** between the thumb and index fingers during use. The grip body **170** may also be non-bulging or have any number of shapes, such as circular, a true oval shape and the like.

In one preferred construction, the grip body **170** has a multiplicity of finger grip protrusions **173** projecting from the front and rear surfaces **171, 172.** The finger grip protrusions **173** provide a tactile feature to increase the friction on the user's finger surfaces and thus enhance the user's ability to grip the handle **110,** particularly under wet conditions. The finger grip protrusions 173 are preferably provided in a desired conical or frusto-conical shape for improved grip performance. Of course, other roughened surfaces could be used.

The grip body **170** is constructed of a resilient material, such as a soft thermoplastic elastomer (TPE). To provide optimum comfort as well as control benefits, the resilient materials of the grip body **170** preferably has a hardness durometer in a range of A11 to A15 Shore hardness. Of course, materials outside this hardness range could also be used. As an example, one preferred elastomeric material for the grip body **170** is styrene-ethylene/butylene-styrene (SEBS) manufactured by GLS Corporation. Nevertheless, other manufacturers can supply the SEBS material and other materials could be used.

Preferably, the grip body **170** is constructed of a different type of resilient material than that which the grip cover **160** is constructed. For example, it is preferred that the grip body **170** be constructed of a resilient material having a different hardness as compared to the hardness of the grip cover **160.** The material of the grip body **170** is preferably softer than the material forming the grip cover **160.** In this manner, the handle **110** may be provided with different grip features to complement the particular control need. The material of the resilient grip body **170** and the grip cover **160** are preferably each a thermoplastic elastomer.

Referring now to FIGS. 1, 5 and 6 concurrently, the structural cooperation of the four components **140, 150, 160, 170** of the toothbrush **100** will now be described in detail with respect to a preferred construction. In the preferred construction, the elongated handle body **150** is constructed of opaque PP, the core structure **140** is constructed of transparent SAN, the grip body **170** is constructed of a TPE having a first hardness, and the grip cover **160** is constructed of a TPE having a second hardness that is greater than the first hardness.

The core structure **140** is disposed within and fills the through slot **250** of the elongated handle body **150.** As a result, the core structure **140** is partially surrounded by the elongated handle body **150** in a circumferential manner. More specifically, the core structure **140** is within the through slot **250** so that the elongated handle body **150** overlies (and thus covers) only the front and rear surfaces **143, 144** of the core structure **140.** The right and left lateral surfaces **141, 142** of the core structure **140** protrude from the through slot **250** and remain exposed on the handle **110** so that a user can view into and/or through the core structure **140.** In essence, the core structure **140** provides a window into and through the handle **110.**

The core structure **140** is located within the through slot **250** so that the protuberances **240-243** of the core structure **140** extend into the through holes **256** of the elongated handle body **150.** As a result, the contact surfaces **244-247** of the core structure **140** are exposed in the through holes **256** of the elongated handle body **150.** The extension of the protuberances **240-243** into the through holes **256** provides a mechanical connection between the core structure **140** and the elongated handle body **150** that assists in preventing unwanted relative rotation and/or separation of the core structure **140** from the elongated handle body **150** during repeated use. Such a mechanical connection is desirable as the SAN of the core structure **140** and the PP of the elongated handle body **150** do not form a chemical bond with each other during the injection molding process.

Additionally, the inner arcuate ridges **252** of the elongated handle body **150** extend into and nest within the arcuate grooves **248** of the core structure **140,** thereby increasing the mechanical fitting connection between the core structure **140** and the elongated handle body **150.**

The grip body **170** is disposed within and fills the aperture **155** of the elongate handle body **150.** The convex front and rear surfaces **171, 172** of the grip body **170** bulge from the aperture **155** and form a portion of the front and rear surfaces **111, 112** of the overall handle **110.** The grip body **170** is preferably formed in the aperture **155** via a one or two shot injection molding technique. The tapered shape of the sidewalls **156** of the aperture help retain the grip body **170** within the aperture over the life cycle of the toothbrush **100.** Additionally, a chemical bond may be formed between the TPE of the grip body **170** and the PP of the elongated handle body **150** during the injection molding process.

The grip cover **160** is applied to the outer surface of the elongated handle body **150** once the core structure **140** is properly located within the through slot **250** as discussed above. More specifically, the grip cover **160** is fixed to the elongated handle body **150** so that: (1) the front leg **161** of the grip cover **160** nests within the portion of the channel **254** on the front surface **151** of the elongated handle body **150;** (2) the curved portion **165** of the grip cover **160** nests within the portion of the channel **254** that wraps around the proximal end **255** of the elongated handle body **150;** and (3) the rear leg **162** of the grip cover **160** nests within the portion of the channel **254** on the rear surface **152** of the elongated handle body **150.** As a result, the grip cover **160** overlies and conceals the through holes **256** of the elongated handle body **150.** More specifically, the front leg **261** overlies and conceals the through holes **256** on the front surface **151** of the elongated handle body **150** while the rear leg **262** overlies and conceals the through holes **256** on the rear surface **152** of the elongated handle body **150.**

The outer arcuate ridges **257** of the elongated handle body **150** extend into the openings **166** of the grip cover **160** but remain depressed below the rear surface **164** of the rear leg **162** of the grip cover **160** as discussed above. The grip cover **160** fills the channel **254,** thereby wrapping around the proximal end **155** of the elongated handle body **150** and surrounding the aperture **155** on both the front and rear surfaces **151, 152** of the elongated handle body **150.** The grip cover **160** also fills the transverse channels/slots between the outer arcuate ridges **257** of the elongated handle body **150.**

The grip body **160** is fixed to the elongated handle body **150** by a chemical bond that is formed between the TPE of the grip cover **160** and the PP of the elongated handle body **150** during the injection molding process. Finally, while grip cover **160** is shown as a single unitary member or layer, it could be formed by separate independent parts or sections in certain embodiments.

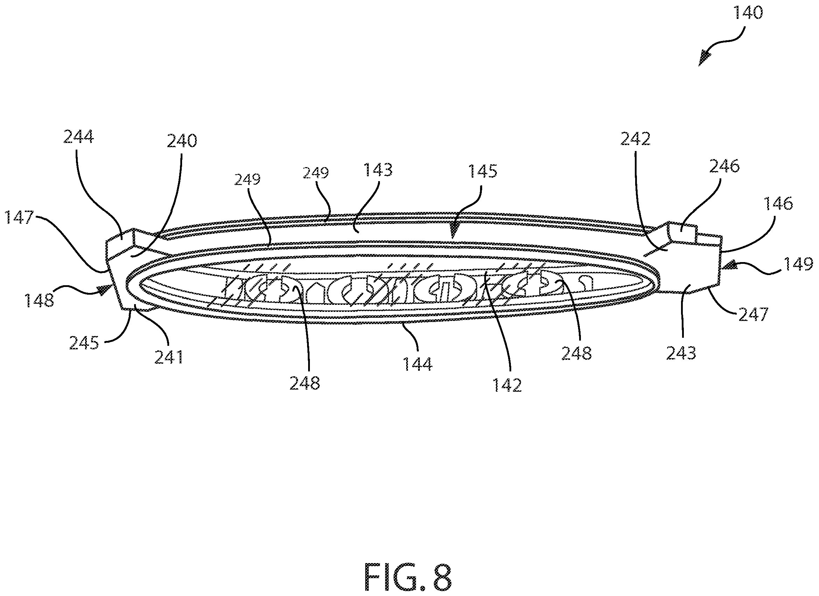

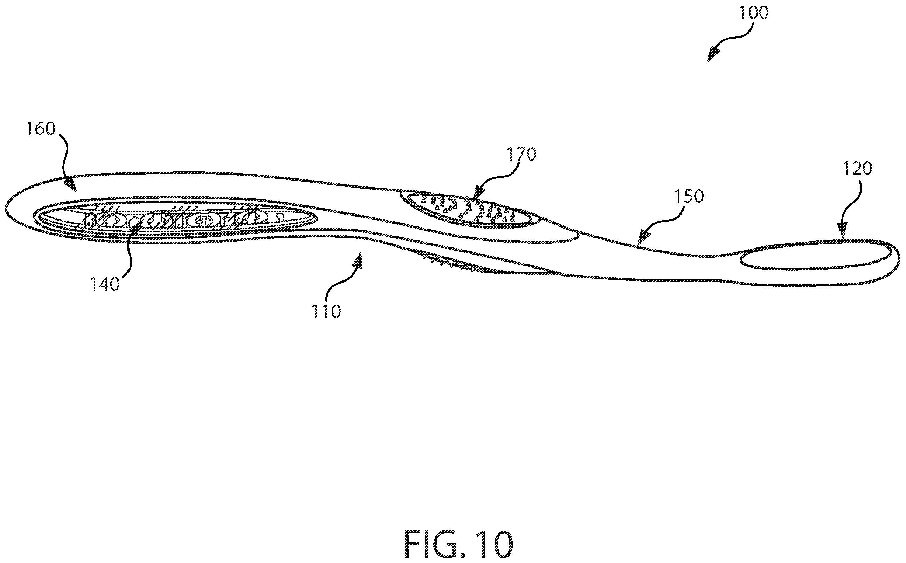

Referring now to FIGS. 8-10, a method of manufacturing the toothbrush **100** according to one embodiment of the present invention will be described.

The first component created in manufacturing the toothbrush **100** is the core structure **140.** To create the core structure **140,** a first mold is provided having a first mold cavity and at least one port/nozzle for injecting liquefied SAN into the first mold cavity. Preferably a single port is used to inject the liquefied SAN. The first mold cavity has a volume that is sized and shaped to correspond to the core structure **140.** The first mold may be two-part mold, as is known in the art. Once the first mold cavity is created/provided, liquefied SAN is injected into the first mold so as to fill the first mold cavity. The liquefied SAN is allowed to cool to an appropriate temperature so as to form the core structure **140,** as shown in FIG. 8, for further handling.

Once the core structure **140** is created (and allowed to adequately cool for further handling), the core structure **140** is supported by one or more clamping members that engage one or more points of contact on the contact surfaces **244-247** with at least one set of arms.

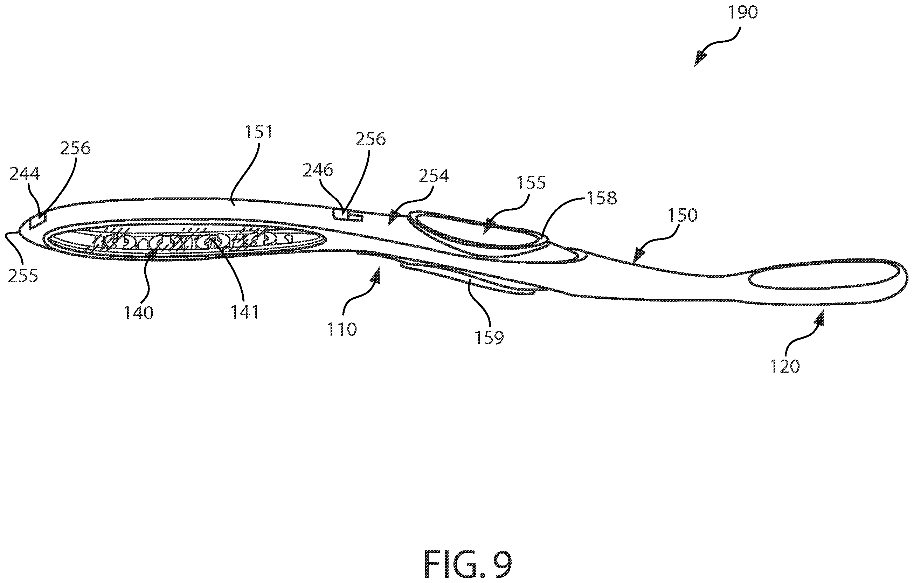

Once the clamping member is properly supporting the core structure **140** through surface contact created between its arms and the contact surfaces **244-247,** the core structure **140** is positioned within a second mold cavity of a second mold. This positioning can be effectuated by either moving the core structure **140** into the second mold cavity or by creating the second mold cavity about the core structure **140** while supporting the core structure **140** in a stationary manner, which can be accomplished by translating and mating multiple pieces of the second mold into position so that the second mold cavity is formed about the core structure **140.** The second mold cavity has a volume that is sized and shaped to correspond to the handle assembly **190** (FIG. 9). One or more ports are present in the second mold for injecting liquefied PP into the second mold cavity. Preferably a single port is used to inject the liquefied PP.

Once the core structure **140** is in proper position within the second mold cavity (and the second mold cavity is adequately sealed), the liquefied PP is injected into the second mold cavity so as to fill the remaining volume of the second mold cavity that is not occupied by the core structure **140.** The liquefied PP partially surrounds the core structure **140,** which remains supported by the clamping member (as described above) during the injection and filling of the second mold cavity with the liquefied PP.

The liquefied PP is then allowed to cool to an appropriate temperature, thereby forming the elongated handle body **150** about the core structure **140,** as shown in FIG. 9. The core structure **140** and elongated handle body **150** collectively form a handle assembly **190** (illustrated in FIG. 9). As a result of the core structure **140** being supported at the contact surfaces **244-247** by the arms of the clamping member during the formation of the elongated handle body **150,** the liquefied PP surrounds the arms of the clamping (and does not cover the contact surfaces **244-247).** Thus, upon cooling of the liquefied PP (i.e., the formation of the elongated handle body **150**), the removal of the arms of the clamping member from the core structure **140** results in through holes **256** being formed in the front and rear surfaces **151, 152** of the elongated handle body **150** through which the contact surfaces **244-247** are exposed. The SAN material of the core structure **140** does not chemically bond with the PP of the elongated handle body **150** during the injection molding process.

Once the handle assembly **190** is sufficiently cool for further handling, the handle portion **110** is positioned within a third mold cavity of a third mold. The handle assembly **190** is preferably supported by the head portion **230** during this process. The third mold cavity has a volume that is sized and shaped to receive the handle portion **110** of the handle assembly **190** while leaving a remaining volume open that corresponds to the grip cover **160.** One or more ports are present in the third mold for injecting liquefied TPE into the remaining volume of the third mold cavity. Preferably a single port is used to inject the liquefied TPE of the grip cover **160.**

Once the handle portion **110** of the handle assembly **190** is in proper position within the third mold cavity, the liquefied TPE is injected into the third mold cavity so as to fill the remaining volume of the third mold cavity that is not occupied by the handle portion **110** of the handle assembly **190.** As a result, the liquefied TPE fills the channel **254** of the elongated handle body **150** thereby forming an overmolded grip cover **160** that is fixed to the elongated handle body **150.** The TPE of the grip cover **160** is then allowed to cool. The TPE material of the grip cover **160** chemically bonds with the PP of the elongated handle body **150** during this injection molding process.

Either before, after or simultaneously with forming the grip cover **160,** the aperture **155** of the elongated handle body **150** is filled with a soft TPE to form the grip body **170.** This is achieved by injecting the liquefied soft TPE into the aperture **155,** which is enclosed by an appropriate mold, via a port that is in fluid communication with the aperture **155.** The mold can be a fourth mold or it can be the third mold. In instances where the third mold is used, the third mold would include a fourth mold cavity that is isolated from the third mold cavity. The TPE material of the grip body **170** chemically bonds with the PP of the elongated handle body **150** during this injection molding process.

The inventive aspects discussed above may be practiced for a manual toothbrush or a powered toothbrush. In operation, the previously described features, individually and/or in any combination, improve the control, grip performance, aesthetics and cost point of oral implements. Other constructions of toothbrush are possible. For example, the head **120** may be replaceable or interchangeable on the handle **110.** The head **120** may include various oral surface engaging elements, such as inter-proximal picks, brushes, flossing element, plaque scrapper, tongue cleansers and soft tissue massages. While the various features of the toothbrush **100** work together to achieve the advantages previously described, it is recognized that individual features and sub-combinations of these features can be used to obtain some of the aforementioned advantages without the necessity to adopt all of these features in an oral care implement.

## Claims

1. An oral care implement (100) comprising:
a head (120);
a handle (110) having a distal end and a proximal end, the head (120) connected to the distal end of the handle (110);
the handle (110) comprising a core structure (140) constructed of a first rigid material and an elongated handle body (150) constructed of a second rigid material that does not form a chemical bond with the first material during an injection molding process;
the core structure (140) disposed within a through slot (250) of the elongated handle body (150) so that the core structure (140) is exposed on opposite surfaces of the handle (110);
at least one through hole (256) on a first surface of the elongated handle body (150) through which the core structure (140) is exposed and at least one through hole (256) on a second surface of the elongated handle body (150) through which the core structure (140) is exposed, the second surface opposite the first surface;
the core structure (140) comprising a first protuberance (240, 241) that extends into the through hole (256) on the first surface of the elongated handle body (150) and a second protuberance (242, 243) that extends into the through hole (256) on the second surface of the elongated handle body (150); and
a grip cover (160) constructed of a resilient material covering the through holes (240, 241, 242, 243) on the first and second surfaces of the elongated handle body (150), the resilient material forming a chemical bond with the second material during an injection molding process.

2. The oral care implement of claim 1,
wherein the through hole (256) on the first surface of the elongated handle body (150) is aligned with the through hole (256) on the second surface of the elongated handle body (150).

3. The oral care implement of claim 1 or claim 2,
comprising at least two of the through holes (256) on the first surface of the elongated handle body (150) and at least two of the through holes (256) on the second surface of the elongated handle body (150).

4. The oral care implement of any of the preceding claims,
wherein the first surface of the elongated handle body (150) is a front surface (151) and the second surface of the elongated handle body (150) is a rear surface (152).

5. The oral care implement of any of the preceding claims,
wherein the through slot (250) extends from the right lateral surface (153) to the left lateral surface (154) of the elongated handle body (150), wherein a pair of through holes (256) is provided on each of the front and second surfaces (151, 152) of the elongated handle body (150) within a channel (254) formed in the outer surface of the elongated handle body (150), wherein the channel (254) is a U-shaped channel that starts on the front surface (151) of the elongated handle body (150), wraps around a proximal end (255) of the elongated handle body (150), and continues onto the rear surface (152) of the elongated handle body (150), wherein a first pair of the through holes (256) is located adjacent a proximal end (255) of the elongated handle body (150), a second pair of the through holes (256) is located adjacent the transition point (TP1) between the proximal section (115) and the middle section (116), the through holes (256) receive the protuberances (240-243) of the core structure to provide a mechanical connection between the core structure (140) and the elongated handle body (150) when the core structure (140) is disposed within the elongated handle body (150).

6. The oral care implement of any of the preceding claims,
wherein the first rigid material is SAN and the second rigid material is PP.

7. The oral care implement of any of the preceding claims, wherein the through slot exposes the core structure on opposite lateral surfaces of the handle; and wherein the grip cover (160) covers a front surface, a rear surface and a proximal end surface of the elongated handle body.

8. The oral care implement of claim 7,
wherein the first rigid material is a substantially transparent hard plastic and the second rigid material is an opaque hard plastic.

9. The oral care implement of claim 8,
wherein the grip cover (160) is constructed of a thermoplastic elastomer.

10. The oral care implement of claim 7,
wherein the grip cover (160) is located within a channel formed into the elongated handle body (150).

11. The oral care implement of claim 7,
wherein the handle (110) comprises a proximal section (115), a middle section (116) and a neck section (117), the proximal section (115) extending from the proximal end of the handle (110) to the middle section (116); the middle section (116) extending from the proximal section (115) to the neck section (117), and the neck section (117) extending from the middle section (116) to the distal end of the handle (110); and wherein the core structure (140) is located within the proximal section (115) of the handle (110), and the grip cover (160) is located on both the proximal (115) and middle sections (116) of the handle (110).

12. The oral care implement of claim 11,
further comprising an aperture (155) extending through the elongated handle body (150) from a front surface (151) of the elongated handle body (150) to a rear surface (152) of the elongated handle body (150), a grip body (170) constructed of a resilient material filling the aperture (155) so that a front surface (171) and a rear surface (172) of the grip body (170) are exposed on the handle (110), and the aperture (155) located within the middle section (116) of the handle (110).

## Patentansprüche

1. Mundpflegegerät (100) umfassend:
einen Kopf (120);
einen Griff (110) mit einem distalen Ende und einem proximalen Ende, wobei der Kopf (120) mit dem distalen Ende des Griffs (110) verbunden ist;
wobei der Griff (110) eine Kernstruktur (140) aufweist, die aus einem ersten rigiden Material und einem langgestreckten Griffkörper (150) aus einem zweiten rigiden Material aufgebaut ist, das während eines Spritzgussverfahrens keine chemische Bindung mit dem ersten Material bildet;
die Kernstruktur (140) in einem Durchgangsschlitz (250) des langgestreckten Griffkörpers (150) so angeordnet ist, dass die Kernstruktur (140) an gegenüberliegenden Seitenflächen des Griffs (110) freiliegend bleibt;
mindestens eine Durchgangsöffnung (256) auf einer ersten Oberfläche des langgestreckten Griffkörpers (150), durch welche die Kernstruktur (140) frei liegt, und mindestens eine Durchgangsöffnung (256) auf einer zweiten Oberfläche des langgestreckten Griffkörpers (150), durch welche die Kernstruktur (140) frei liegt, wobei die zweite Oberfläche der ersten Oberfläche gegenüberliegt;
wobei die Kernstruktur (140) einen ersten Vorsprung (240, 241), der sich in die Durchgangsöffnung (256) auf der ersten Oberfläche des langgestreckten Griffkörpers (150) erstreckt, und einen zweiten Vorsprung (242, 243), der sich in die Durchgangsöffnung (256) auf der zweiten Oberfläche des langgestreckten Griffkörpers (150) erstreckt, umfasst; und
eine Greifabdeckung (160) aus einem elastischen Material, welche die Durchgangslöcher (240, 241, 242, 243) auf den ersten und zweiten Oberflächen des langgestreckten Griffkörpers (150) abdeckt, wobei das elastische Material mit dem zweiten Material während eines Spritzgussverfahrens eine chemische Bindung eingeht.

2. Mundpflegegerät nach Anspruch 1,
wobei die Durchgangsöffnung (256) in der ersten Oberfläche des langgestreckten Griffkörpers (150) mit der Durchgangsöffnung (256) in der zweiten Oberfläche des langgestreckten Griffkörpers (150) ausgerichtet ist.

3. Mundpflegegerät nach Anspruch 1 oder Anspruch 2,
umfassend mindestens zwei der Durchgangsöffnungen (256) auf der ersten Oberfläche des langgestreckten Griffkörpers (150) und mindestens zwei der Durchgangsöffnungen (256) auf der zweiten Oberfläche des langgestreckten Griffkörpers (150).

4. Mundpflegegerät nach einem beliebigen der vorhergehenden Ansprüche, wobei die erste Oberfläche des langgestreckten Griffkörpers (150) eine vordere Oberfläche (151) ist und die zweite Oberfläche des langgestreckten Griffkörpers (150) eine hintere Oberfläche (152) ist.

5. Mundpflegegerät nach einem beliebigen der vorhergehenden Ansprüche, wobei sich der Durchgangsschlitz (250) von der rechten Seitenfläche (153) zur linken Seitenfläche (154) des langgestreckten Griffkörpers (150) erstreckt, wobei ein Paar an Durchgangsöffnungen (256) auf jeder der vorderen und zweiten Oberflächen (151, 152) des langgestreckten Griffkörpers (150) innerhalb eines Kanals (254), der in der Außenfläche des langgestreckten Griffkörpers (150) ausgebildet ist, angeordnet ist, wobei der Kanal (254) ein U-förmiger Kanal ist, der auf der vorderen Oberfläche (151) des langgestreckten Griffkörpers (150) beginnt, sich um ein proximales Ende (255) des langgestreckten Griffkörpers (150) wickelt und sich bis auf die hintere Oberfläche (152) des langgestreckten Griffkörpers (150) fortsetzt, wobei ein erstes Paar an Durchgangsöffnungen (256) angrenzend an ein proximales Ende (255) des langgestreckten Griffkörpers (150) angeordnet ist, ein zweites Paar an Durchgangsöffnungen (256) angrenzend an den Übergangspunkt (TP1) zwischen dem proximalen Abschnitt (115) und dem mittleren Abschnitt (116) angeordnet ist, die Durchgangsöffnungen (256) die Vorsprünge (240-243) der Kernstruktur empfangen, um eine mechanische Verbindung zwischen der Kernstruktur (140) und dem langgestreckten Griffkörper (150) herzustellen, wenn die Kernstruktur (140) innerhalb des langgestreckten Griffkörpers (150) angeordnet ist.

6. Mundpflegegerät nach einem beliebigen der vorhergehenden Ansprüche, wobei das erste rigide Material SAN und das zweite rigide Material PP ist.

7. Mundpflegegerät nach einem beliebigen der vorhergehenden Ansprüche, wobei der Durchgangsschlitz die Kernstruktur an gegenüberliegenden Seitenflächen des Griffs frei legt; und wobei die Greifabdeckung (160) eine vordere Oberfläche, eine hintere Oberfläche und eine Oberfläche am proximalen Ende des langgestreckten Griffkörper bedeckt.

8. Mundpflegegerät nach Anspruch 7,
wobei das erste rigide Material ein im Wesentlichen transparenter Hartkunststoff ist und das zweite rigide Material ein opaker Hartkunststoff ist.

9. Mundpflegegerät nach Anspruch 8,
wobei die Greifabdeckung (160) aus einem thermoplastischen Elastomer hergestellt ist.

10. Mundpflegegerät nach Anspruch 7,
wobei sich die Greifabdeckung (160) innerhalb eines im langgestreckten Griffkörper (150) ausgebildeten Kanals befindet.

11. Mundpflegegerät nach Anspruch 7,
wobei der Griff (110) einen proximalen Abschnitt (115), einen mittleren Abschnitt (116) und einen Halsabschnitt (117) aufweist, der proximale Abschnitt (115) sich vom proximalen Ende des Griffs (110) zum mittleren Abschnitt (116) erstreckt; der mittlere Abschnitt (116) sich vom proximalen Abschnitt (115) zum Halsabschnitt (117) erstreckt, und der Halsabschnitt (117) sich vom mittleren Abschnitt (116) zum distalen Ende des Griffs (110) erstreckt; und wobei sich die Kernstruktur (140) im proximalen Abschnitt (115) des Griffs (110) befindet und sich die Greifabdeckung (160) sowohl auf dem proximalen (115) als auch auf dem mittleren (116) Abschnitt des Griffs (110) befindet.

12. Mundpflegegerät nach Anspruch 11, das
ferner eine Öffnung (155) aufweist, die sich durch den langgestreckten Griffkörper (150) von einer vorderen Oberfläche (151) des langgestreckten Griffkörpers (150) zu einer hinteren Oberfläche (152) des langgestreckten Griffkörpers (150) erstreckt, und einen Greifkörper (170), der aus einem die Öffnung (155) ausfüllenden elastischen Material hergestellt ist, so dass eine vordere Oberfläche (171) und eine hintere Oberfläche (172) des Greifkörpers (170) auf dem Griff (110) frei liegen, und sich die Öffnung (155) im mittleren Abschnitt (116) des Griffs (110) befindet.

## Revendications

1. Accessoire (100) de soins bucco-dentaires comprenant :
une tête (120) ;
un manche (110) ayant une extrémité distale et une extrémité proximale, la tête (120) raccordée à l'extrémité distale du manche (110) ;
le manche (110) comprenant une structure d'âme (140) constituée d'un premier matériau rigide et un corps de manche allongé (150) constitué d'un deuxième matériau rigide qui ne forme pas de liaison chimique avec le premier matériau pendant un processus de moulage par injection ;
la structure d'âme (140) disposée à l'intérieur d'une fente traversante (250) du corps de manche allongé (150) de sorte que la structure d'âme (140) est exposée sur des surfaces opposées du manche (110) ;
au moins un trou traversant (256) sur une première surface du corps de manche allongé (150) à travers lequel la structure d'âme (140) est exposée et au moins un trou traversant (256) sur une deuxième surface du corps de manche allongé (150) à travers lequel la structure d'âme (140) est exposée, la deuxième surface opposée à la première surface ;
la structure d'âme (140) comprenant une première protubérance (240, 241) qui s'étend dans le trou traversant (256) sur la première surface du corps de manche allongé (150) et une deuxième protubérance (242, 243) qui s'étend dans le trou traversant (256) sur la deuxième surface du corps de manche allongé (150) ; et
un revêtement de préhension (160) constitué d'un matériau élastique couvrant les trous traversants (240, 241, 242, 243) sur les première et deuxième surfaces du corps de manche allongé (150), le matériau élastique formant une liaison chimique avec le deuxième matériau pendant un processus de moulage par injection.

2. Accessoire de soins bucco-dentaires selon la revendication 1,
dans lequel le trou traversant (256) sur la première surface du corps de manche allongé (150) est aligné avec le trou traversant (256) sur la deuxième surface du corps de manche allongé (150).

3. Accessoire de soins bucco-dentaires selon la revendication 1 ou la revendication 2,
comprenant au moins deux des trous traversants (256) sur la première surface du corps de manche allongé (150) et au moins deux des trous traversants (256) sur la deuxième surface du corps de manche allongé (150).

4. Accessoire de soins bucco-dentaires selon l'une quelconque des revendications précédentes,
dans lequel la première surface du corps de manche allongé (150) est une surface avant (151) et la deuxième surface du corps de manche allongé (150) est une surface arrière (152).

5. Accessoire de soins bucco-dentaires selon l'une quelconque des revendications précédentes,
dans lequel la fente traversante (250) s'étend de la surface latérale droite (153) jusqu'à la surface latérale gauche (154) du corps de manche allongé (150), dans lequel une paire de trous traversants (256) est prévue sur chacune des première et deuxième surfaces (151, 152) du corps de manche allongé (150) à l'intérieur d'un canal (254) formé dans la surface extérieure du corps de manche allongé (150), dans lequel le canal (254) est un canal en forme de U qui part de la surface avant (151) du corps de manche allongé (150), s'enroule autour d'une extrémité proximale (255) du corps de manche allongé (150), et continue jusqu'à la surface arrière (152) du corps de manche allongé (150), dans lequel une première paire des trous traversants (256) est située adjacente à une extrémité proximale (255) du corps de manche allongé (150), une deuxième paire des trous traversants (256) est située adjacente au point de transition (TP1) entre la section proximale (115) et la section médiale (116), les trous traversants (256) reçoivent les protubérances (240-243) de la structure d'âme pour fournir une connexion mécanique entre la structure d'âme (140) et le corps de manche allongé (150) lorsque la structure d'âme (140) est disposée à l'intérieur du corps de manche allongé (150).

6. Accessoire de soins bucco-dentaires selon l'une quelconque des revendications précédentes,
dans lequel le premier matériau rigide est du SAN et le deuxième matériau rigide est du PP.

7. Accessoire de soins bucco-dentaires selon l'une quelconque des revendications précédentes, dans lequel la fente traversante expose la structure d'âme sur des surfaces latérales opposées du manche ; et dans lequel le revêtement de préhension (160) couvre une surface avant, une surface arrière et une surface d'extrémité proximale du corps de manche allongé.

8. Accessoire de soins bucco-dentaires selon la revendication 7,
dans lequel le premier matériau rigide est un plastique dur sensiblement transparent et le deuxième matériau rigide est un plastique dur opaque.

9. Accessoire de soins bucco-dentaires selon la revendication 8,
dans lequel le revêtement de préhension (160) est constitué d'un élastomère thermoplastique.

10. Accessoire de soins bucco-dentaires selon la revendication 7,
dans lequel le revêtement de préhension (160) est situé à l'intérieur d'un canal formé dans le corps de manche allongé (150).

11. Accessoire de soins bucco-dentaires selon la revendication 7,
dans lequel le manche (110) comprend une section proximale (115), une section intermédiaire (116) et une section de col (117), la section proximale (115) s'étendant de l'extrémité proximale du manche (110) à la section intermédiaire (116) ; la section intermédiaire (116) s'étendant de la section proximale (115) à la section de col (117), et la section de col (117) s'étendant de la section intermédiaire (116) à l'extrémité distale du manche (110) ; et dans lequel la structure d'âme (140) est située à l'intérieur de la section proximale (115) du manche (110), et le revêtement de préhension (160) est situé à la fois sur les sections proximale (115) et intermédiaire (116) du manche (110).

12. Accessoire de soins bucco-dentaires selon la revendication 11,
comprenant en outre une ouverture (155) s'étendant à travers le corps de manche allongé (150) d'une surface avant (151) du corps de manche allongé (150) à une surface arrière (152) du corps de manche allongé (150), un corps de préhension (170) constitué d'un matériau élastique remplissant l'ouverture (155) de sorte qu'une surface avant (171) et une surface arrière (172) du corps de préhension (170) sont exposées sur le manche (110), et l'ouverture (155) située à l'intérieur de la section intermédiaire (116) du manche (110).
